# EUROPEAN PATENT SPECIFICATION

(11) **EP 2 217 645 B1**
(45) Date of publication and mention of the grant of the patent: **06.07.2011**
(21) Application number: 08851110.0
(22) Date of filing: 18.11.2008
(51) Int. Cl.: C08J 9/12

(54) **MANUFACTURING METHOD OF FOAMED HEAT-INSULATING MATERIAL UTILIZING PAPER AND STARCH**
VERFAHREN ZUR HERSTELLUNG VON GESCHÄUMTEM WÄRMEISOLIERMATERIAL UNTER VERWENDUNG VON PAPIER UND STÄRKE
PROCÉDÉ DE FABRICATION D'UN MATÉRIAU MOUSSE D'ISOLATION THERMIQUE À L'AIDE DE PAPIER ET D'AMIDON

(30) Priority: 19.11.2007 KR 20070117836
(43) Date of publication of application: 18.08.2010
(73) Proprietor: Global Eco Refoam LTD., Central Hong Kong (HK)
(72) Inventor: KITAMURA, Shushi, Kobe-shi, Hyogo-ken (JP)
(74) Representative: Dörr, Klaus
(86) International application number: PCT/IB2008/003104
(87) International publication number: WO 2009/066147

(56) References cited:
- EP-A- 1 396 520
- EP-A- 1 632 524
- JP-A- 2002 161 162

## Description

Degradable foams are generally discussed herein with particular discussions on foams, which are composed of starch and polymers, having degradable characteristics in the natural environment.

Polymer foamed materials have high thermal insulating properties and are useful in various applications. They are frequently used as construction, packaging, buffer, or lagging materials. However, polymer foamed materials generate great bulk upon discarding thereby increasing the volume of landfill. Additionally, conventional polymer foamed materials are not biodegradable or undergo slow degradation processes in natural environment and accordingly, may remain in the soil for a long period of time when disposed under ground. When conventional polymer foamed materials are incinerated as an alternative to landfill deposit, the polymer foamed materials generate high heat or enthalpy thereby often cause damage to the incinerators. In particular, soot and toxic gases generated from the polymer at the time of incineration or fire have to be properly evacuated otherwise they would pose dangerous health problems. Therefore, various efforts in developing foams that are both biodegradable and heat resistant have been studied and continued to develop over recent years.

Aspects of embodiments of the present invention are directed toward a foamed material that is environmental friendly upon discarding whether by landfill waste or incineration and methods of producing the same. The foamed material is biodegradable and includes a mixture of starch, paper powder, and biodegradable resin. Methods of producing the material can be done under a vapor pressure to produce the foaming characteristics in an efficient and large commercialized scale manner.

In one embodiment, the manufacturing method of producing foamed materials includes foaming a foam composite under vapor pressure. The foam composite is mixed, heated in an extruder, and extruded through a die to form a foamed material. The foam composite may be composed of paper powder, such as fine wooden powder, starch, ground tea leaves, and a polymer resin. Water can be used to produce adequate vapor pressure and/or change the viscosity of the foam composite.

In one embodiment, the method includes providing paper powder, starch, and polypropylene as a major component (or a foam composite) of the heat insulating material by setting the weight amount of starch higher than that of the paper powder, setting the weight ratio of the polypropylene not greater than 50 weight percent (%) of the major component, and setting the melt flow rate of the polypropylene between 1 and 15 g/10 min; adding water to the major component to form a wet mixture and foaming the wet mixture to provide a foamed heat insulating material. In another embodiment, plant fibers may be added to form the foamed heat insulating materials. The plant fibers may be selected from the group consisting of wood, trunk or fruit core of sugar cane, rice stem, barley trunk, and combinations thereof. Each strand of the plant fibers may have an average length between 50 and 300 µm and an average thickness between 10 and 30 µm.

In one embodiment, the above materials are extruded through an extruder. The extruder may have different die shapes or types to produce a block of foamed material or a block of foamed material having strands embedded therein.

In one embodiment, a weight ratio of the paper powder and the starch is between 1: 4 and 2: 3. In another embodiment, the weight ratio of the polypropylene is between 40 weight % and 50 weight % of the major component. The starch component may be com starch. The melt flow rate of the polypropylene may be set between 3 and 13 g/10 min. The paper powder may have a maximum particle size not greater than 0.3 mm.

In one embodiment, the produced foamed heat insulating material has heat conductivity not greater than 0.035W/m-K, and a density not greater than 0.07 g/cm3.

According yet to another embodiment of the present invention, the method of manufacturing the foamed heat insulating material includes forming raw paper material into paper powder; forming a paper pellet mixture by mixing the paper powder with starch and setting the weight amount of starch higher than that of the paper powder; introducing the paper pellet mixture and polypropylene into an extruder; setting the weight ratio of the polypropylene not greater than 50 weight percent (%) of the mixture of the paper pellet mixture and the polypropylene, and setting the melt flow rate of the polypropylene between 1 and 15 g/10 min; and adding water to the mixture of the paper pellet mixture and the polypropylene to form a wet mixture and foaming the wet mixture to provide a foamed heat insulating material. In one embodiment, the paper powder has a maximum particle size not greater than 0.3 mm.

In one embodiment, the step of forming of the paper pellet mixture includes mixing the paper powder with the starch to form mixed powder; adding a polyvinyl alcohol solution to the mixed powder and wet-forming the mixed powder with the polyvinyl alcohol to form wet-formed pellets; and drying the wet-formed pellets to form the paper pellet mixture.

FIG. 1 is a schematic of a block of foamed material according to an embodiment of the present invention;

FIG. 2 is a schematic of a block of foamed material with foam strands according to another embodiment of the present invention; and

FIG. 3 is a schematic of a process of producing the foamed material according to an embodiment of the present invention.

In the following detailed description, only certain exemplary embodiments of the present invention are shown and described, by way of illustration. As those skilled in the art would recognize, the invention may be embodied in many different forms and should not be construed as being limited to the embodiments set forth herein. Like reference numerals designate like elements throughout the specification.

Biodegradable foamed materials and processes for producing the same are described below in detail. A biodegradable foamed material according to an embodiment of the present invention contains paper powder, starch, and a biodegradable resin as a major component or a main portion of the foamed material (or foam composite). Heat conductivity and density characteristics of foamed materials are important for heat insulating application in construction. Low heat conductivity ensures good insulation capacity, and low density makes the foamed materials light and easier for handling. Heat conductivity and density in a foamed material are affected by the internal foam structures, particularly by the foaming percentage or degree, or in other words, by the presence of bubbles. The higher the foaming degree the lower the heat conductivity and density. The foaming degree may be determined by the melt viscosity of raw materials, which can be controlled by varying the extruding process conditions.

In one embodiment, the foamed material is a reaction product of a mixture composed of paper powder, starch, and a polymer resin. In one embodiment, the amount of starch is preferably higher than the amount of paper powder. In one embodiment, the weight ratio of the paper powder to starch is between 1:4 and 2:3. In one embodiment, when the amount of paper powder is higher than the amount of starch, the shapes of the bubbles are not desirable hence the foam-forming capacity may reduce. In another embodiment, when the amount of starch is excessively high, the moldability of the foamed material may decrease and at the same time, both the heat resistance and water resistance of the foamed material may also reduce. Therefore, when the ratio is within the above specified range, in particular, when the ratio of the paper powder to starch is reduced, the elasticity of the foamed material may improve. Good elasticity of the foamed material is desirable because it enhances the construction performance of the material when used as an insulating material.

In various embodiments, the paper powder is obtained from crushed paper, cardboard, or from disintegrated paper or cardboard. Old paper is preferred in some cases because of reduced raw material costs. Generally, old paper is used to produce recycled paper, while low-quality old paper is converted to paper powder to be used in composites, such as the one in embodiments of the present invention. Any size of paper powder can be used. In certain embodiments, the paper powder has a maximum particle size of 0.3 mm. In other embodiments, the particle size of the paper powder is preferably less than 0.3 mm.

Starch acts as a foam-forming material and as a filler. At the same time, starch has good binding capacity to plant fibers and therefore, can act as a binder for binding plant fibers. Nonlimiting examples of suitable materials that can be used for starch include corn, wheat, rice plant, tapioca, potato, and combinations thereof.

Polymer resin is used to improve the mechanical strength of the foam and at the same time to improve the heat resistance. Nonlimiting examples of suitable polymer resins include biodegradable thermoplastic resins, polypropylene, polylactic acid, succinate polymers such as polyethylene succinate and poly-butylene succinate, polycaprolactone, polyhydroxyalkanoate such as polyhydroxypropionate, polyhydroxybutyrate, and polyhydroxyvalerate, and copolyesters including an aromatic component, and combinations thereof. In one embodiment, the polymer resin is polypropylene. The amount of polypropylene can be adjusted to be lower than 50 wt% based on the total dry weight of the foam composite.

As mentioned previously, the foaming structure or degree of a foamed material has a significant impact on the material insulation capacity. However, the foaming degree is almost impossible to measure practically. Therefore, in various embodiments, suitable polymer resins are selected based on the melt viscosity of the resins measured at the extruding process conditions, such as the extruding temperature, for example. Accordingly, in one embodiment, polypropylene is used as the main component based on its melt flow rate (MFR) value.

The MFR values are used as index for melt viscosity of polymer resin. In various embodiments, MFR values are used to define the desired physical properties of polypropylene. Measurement methods for determining MFR values are described in International Standard ISO 1133 (Japanese Industrial Standard JIS K7210, which is hereby incorporated by reference in its entirety). There are two methods that a MFR value can be determined. The first method involves a measurement of the resin extrusion amount per unit of time, and the second method involves a measurement of time to extrude a certain amount of resin. Generally, the first method is used for materials having low MFR values, and the second method is used for materials having high MFR values. In one embodiment, since the MFR value for polypropylene is relatively low, the first method is preferred but the second method can also be used.

In one embodiment of the present invention, the MFR value for polymer resins or specifically for polypropylene is preferably less than 15 g/10 min, or specifically, between 1 and 15 g/10min, or more specifically between 3 and 13 g/10min. In one embodiment, if the MFR value of polypropylene is high (e.g., greater than 15 g/10 min) or the melt viscosity of the material is low, the bubbles formation may not be adequate, or the bubbles can easily burst. When many bubbles burst, adjacent bubbles may form bigger in sizes. However, big bubbles in the foaming structure impart poor heat conductivity and insulation capacity. In another embodiment, if the MFR value of polypropylene is low (e.g. lower than 1 g/10min) or the melt viscosity of the material is high, insufficient foam-forming capacity under vapor pressure may occur, which will also deteriorate the insulation capacity.

The melt viscosity of the polymer resin can be controlled by adjusting the extruding process temperatures. In particular, the melt viscosity can be decreased by increasing the heating or process temperature. Similarly, the melt viscosity can be increased by lowering the process temperature. However, process temperature drops may reduce the vapor pressure necessary for foam forming and thereby decrease the foam-forming capacity. Similarly, process temperature increases can also create other adverse problems. In particular, when the process temperature is increased to decrease the viscosity, the high temperature may decompose the low-heat-resistant starch and thereby deteriorate the binding property of the starch. Accordingly, in embodiments of the present invention, polypropylenes having MFR values within the above specified ranges are preferred so sufficient foam-forming capacity can be achieved without modifying the process conditions excessively.

Polypropylene can be incorporated in the foam composite at an amount less than 50 wt% based on the total dry weight of the foam composite. The amount of polypropylene can be between 40 to 50 wt%. In one embodiment, if the amount of polypropylene is higher than the specified range, positive impacts on the environment and the biodegradability of the foamed material may not be realized. In another embodiment, if the amount of the polypropylene is lower than the specified range, the foam-forming capacity may decrease.

Plant fibers may be added to provide bulk and as fillers to the foam composite. In addition, plant fibers can facilitate an increase in the biodegradability, bactericidal, and heat resistance characteristics of the foamed materials. Almost any parts of the plant, particularly, plant seeds, leaves, stems, stocks, or skins can be used as the plant fibers. In certain embodiments, plant wastes such as seed husks or left-over of the extracts can also be used. For example, husks of grain kernels of rice, wheat, buckwheat, soybeans, coffees, and peanuts; or fruit skin of chestnuts, oranges, apples, pears, etc. ; and fruit residue thereof. Other nonlimiting examples of suitable plant fibers include wood, trunk, or fruit of sugar canes, rice stems, barley trunks, and combinations thereof.

The plant fibers can be processed or modified to a set or desirable size range. In one embodiment, the plant fibers have an average length between 50 and 300 µm. In another embodiment, the plant fibers have an average thickness or diameter between 10 to 30 µm.

The foamed material produced from using the above composition can have heat conductivity less than 0.35 W/m-K and density less than 0.07 g/cm³. Accordingly, it can be used for foamed heat insulating materials. The foamed heat insulating materials according to various embodiments of the invention are light in weight and have good heat insulation capacity. In one embodiment of the present invention, the foamed heat insulating material has more than 50 wt% paper powder and starch, therefore the biodegradability of the overall material increases and has a positive impact on the environment. In addition, the enthalpy of the foamed heat insulating material is lower than conventional materials so damage to incineration furnaces can be reduced or even prevented.

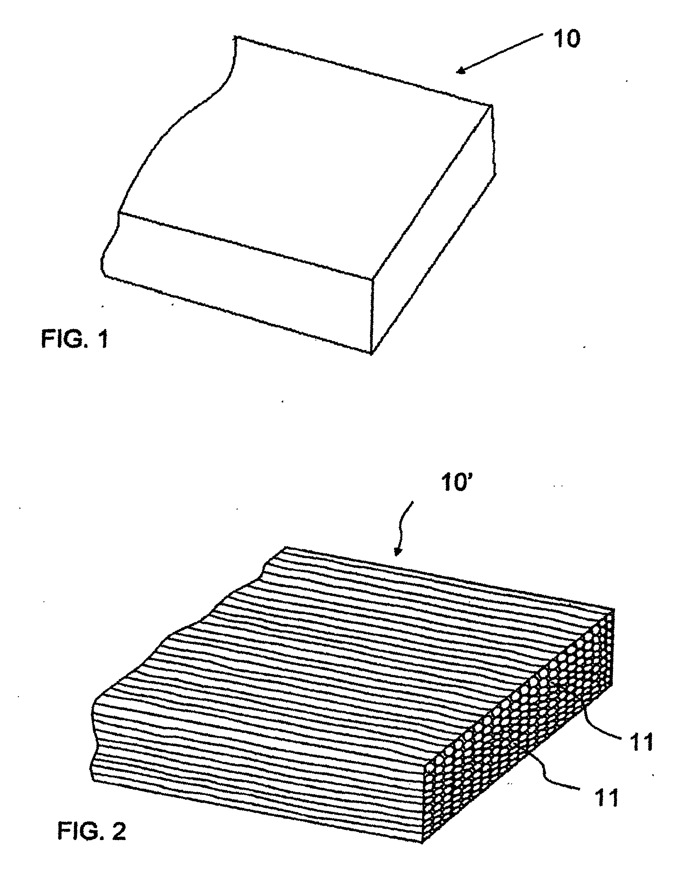

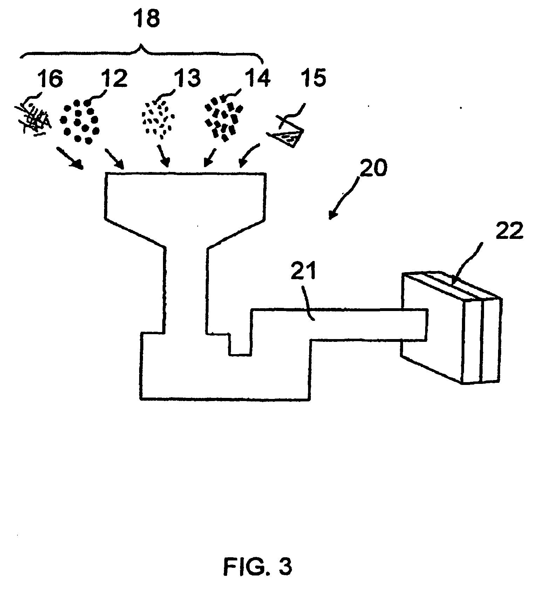

Methods for producing biodegradable foam will now be described. Referring now to FIG. 3. In one embodiment, the plant fibers 16 are obtained by drying and crushing fibrous materials such as sugar cane parts to have a maximum thickness (or particle diameter) of 300 µm or less and preferably of 30 µm or less by ball milling or the like. The plant fibers 16 along with paper powder 12, starch 13, and polymer resin 14 form a major component or foam composite 18. A vapor solution 15 such as water is put into a hopper along with the foam composite 18 to form a wet mixture. The water vapor produced from the water in the process aids in the formation of foams. The wet mixture is then heated, kneaded through a 2-axis cylinder 21, and extruded from a die portion 22 of the extruder 20. The material produced from the die 22 is foamed and formed a block of foamed material 10' with foamed strands 11 forming therein (FIG. 2). Alternatively, the major component or foam composite is heated and kneaded without the use of an extruder and the foam composite with an optional amount of water is placed in a mold to provide a block shaped foamed material 10 with no foamed strands (FIG.1). The type of foamed material having foamed strands can be provided using different dies 22. The foamed strands 11 can be provided in different diameter sizes depending on the types of die 22 selected.

In one embodiment, polypropylene with a MFR value between 1 and 15 g/10 min (preferably between 3 and 13 g/10 min) is selected. The paper powder is obtained from paper product (e.g., processed old paper produced from a disintegrator process, which is described in Japanese Patent No. 3738367, the entire content of which is incorporated herein by reference.) In one embodiment, the paper powder has a maximum particle size less than 0.12 mm.

In one embodiment, starch and paper powder are mixed to form a mixture pellet shape mixture. The pellet shape mixture is then introduced into a hopper along with polypropylene. The melt flow rate (MFR) of polypropylene is set to be between 1 and 15 g/10 min. The weight ratio of paper powder to starch is 2:3 and the weight ratio of polypropylene is between 40 and 50 dry wt% based on the total composite weight. Water is then added to the mixture to form foaming. The amount of water can be determined based on the desired degree of foaming. In one embodiment, the amount of water is adjusted until a sufficient vapor pressure is attained to form a sufficient internal foaming structure and there is not any residual water left after extrusion.

The vapor pressure and melting flow rate of the polymer are controlled by adjusting the extruding process temperatures. Different sections of the extruder, such as the heating temperature of the die 22 and/or cylinder 21 can be controlled so that certain flows of the mixture can be attained and the starch will not decompose under high heat. The extruder 20 can be a 2-axis extruder using water for building up vapor pressure. In this way, when the molten composite is extruded through die 22, the composite will foam and expand by the vapor pressure and solidify almost instantaneously by heat evaporation.

The present invention will be described in more detail with reference to the following examples. However, these examples are for illustrative purposes only and are not intended to limit the scope of the present invention.

### Example 1

Waste paper packaging material was disintegrated (using a disintegrator as described in Japanese Patent No. 3738367, which is hereby incorporated by reference in its entirety) to provide paper powder having a maximum particle size less than 0.12 mm diameter. A mixture of 40 wt% the paper powder and 60 wt% com starch was put in a mixer to provide a mixed powder. For every 100 wt% mixed powder, 60 wt% of 3.75% polyvinyl alcohol solution was added and thoroughly mixed to form a wet pellet mixture. The wet pellet mixture was dried to 15 wt% moisture content to form a "paper pellet" mixture.

The paper pellet mixture was fed into a first feed hopper of the 2-axis extruder (MTE77 model, available from TSP Co., LTD), and a powdered polypropylene mixture was added to a second feed hopper. While a two-feed-hopper extruder was used in the embodiment of the present invention, a one-feed hopper extruder can also be used. The temperature of the extruder was adjusted so that a flow rate of polypropylene was at 10g/10 min. The flow rate of the first feed hopper was also adjusted so that the weight percentages of the paper pellet and the polypropylene were at 45 and 55 wt%, respectively. Water was then added to the cylinder of the extruder, the die temperature was set to 175°C and the extruder was set at 270 rpm. The mixture was passed through a die and produced an extruded foamed material that is 50 mm thick and 265 mm wide. The foamed material was cut at every two meters as it passed along on a conveyor belt. The foamed material was then cooled at ambient conditions for two days by placing them in storage.

The produced foamed material was a reaction product of a foam composite composed of about 18 wt% paper powder, 37 wt% starch, and 45 wt% polypropylene. The foamed material has a density of about 0.020 g/cm³ and heat conductivity of 0.335 W/m-K.

### Example 2

The same materials and process as Example 1 were used, except for the selection of polypropylene. The polypropylene used in Example 2 has pellet shape and a MFR value of 3 g/10min.

The produced foamed material was a reaction product of a foam composite composed of about 18 wt% paper powder, 37 wt% starch, and 45 wt% polypropylene. The foamed material has a density of about 0.018 g/cm³ and heat conductivity of 0.333 W/m-K.

### Comparative Example

The same materials and process as Example 1 were used, except for the selection of a different type of polypropylene. The polypropylene used in the Comparative Example has pellet shape and a MFR value of 20 g/10min.

The produced foamed material was a reaction product of a foam composite composed of about 18 wt% paper powder, 37 wt% starch, and 45 wt% polypropylene. The foamed material has a density of about 0.019 g/cm³ and heat conductivity of 0.368W/m-K.

As can be seen from the examples produced, the foamed materials of Examples 1 and 2 have better heat resistance because the heat conductivity is smaller. The better heat insulating material were produced using 3 or 10g/10min MFR typed polypropylene. It is noted that the Comparative Example has higher heat conductivity while there is no significant increase in density.

In view of the foregoing, various embodiments of the present invention provide a foamed heat insulating material made of paper, starch and a polymer resin and methods of manufacturing the same. The method includes providing paper powder, starch, and polypropylene as a major component of the foamed material by setting the starch to be higher in weight amount than that of the paper powder, setting the weight ratio of the polypropylene not greater than 50 weight percent (%) of the major component, and setting melt flow rate of the polypropylene between 1 and 15 g/10 min; add water to the major component to form a wet mixture and foaming the wet mixture to form a heat insulating material.

## Claims

1. A method of manufacturing a foamed heat insulating material utilizing paper and starch, the method comprising:
providing paper powder, starch, and polypropylene as a major component of the insulating material by:
setting a weight amount of the starch to be higher than that of the paper powder,
setting a weight ratio of the polypropylene to be not greater than 50 weight percent (%) of the major component, and
setting a melt flow rate of the polypropylene to be between 1 and 15 g/10 min;
adding water to the major component to form a wet mixture; and
foaming the wet mixture.

2. The method of claim 1, wherein the providing of the paper powder, the starch, and the
polypropylene comprises providing com starch.

3. The method of claim 2, wherein the foamed heat insulating material has a heat conductivity not greater than 0.035W/m-K.

4. The method of claim 3, wherein the foamed heat insulating material has a density not greater than 0.07 g/cm3.

5. The method of claim 1, wherein the foamed heat insulating material has a heat conductivity not greater than 0.035W/m-K.

6. The method of claim 5, wherein the foamed heat insulating material has a density not greater than 0.07 g/cm³.

7. The method of claim 1, wherein the setting of the melt flow rate of the polypropylene comprises setting the melt flow rate of the polypropylene to be between 3 and 13 g/10 min.

8. The method of claim 1, wherein the paper powder has a maximum particle size not greater than 0.3 mm.

9. The method of claim 1, wherein the setting of the weight amount of the starch to be higher than that of the paper powder comprises setting a weight ratio of the paper powder and the starch to be between 1 : 4 and 2 : 3.

10. The method of claim 1, wherein the setting of the weight ratio of the polypropylene to be not greater than 50 weight % of the major component comprises setting the weight ratio of the polypropylene to be between 40 weight % and 50 weight % of the major component.

11. The method of claim 1, further comprising:
extruding the wet mixture through an extruder.

12. The method of claim 1, further comprising:
providing plant fiber having an average length between 50 and 300 µm and an average thickness between 10 and 30 µm as a part of the major component.

13. The method of claim 12, wherein the plant fiber is selected from the group consisting of wood, trunk or fruit core of sugar cane, rice stem, barley trunk, and combinations thereof.

14. A method of manufacturing foamed heat insulating material, the method comprising:
forming a raw paper material into paper powder;
forming a paper pellet mixture by mixing the paper powder with starch and setting a weight amount of the starch to be higher than that of the paper powder;
introducing the paper pellet mixture and polypropylene into an extruder, setting a weight ratio of the polypropylene to be not greater than 50 weight percent (%) of a mixture of the paper pellet mixture and the polypropylene, and setting a melt flow rate of the polypropylene to be between 1 and 15g/10 min;
adding water to the mixture of the paper pellet mixture and the polypropylene to form a wet mixture; and
foaming the wet mixture.

15. The method of claim 14, wherein the mixing of the paper powder with the starch comprises mixing the paper powder with corn starch.

16. The method of claim 14, wherein the foamed heat insulating material has a heat conductivity not greater than 0.035W/m-K.

17. The method of claim 16, wherein the foamed heat insulating material has a density not greater than 0.07 g/cm³.

18. The method of claim 14, wherein the setting of the melt flow rate of the polypropylene comprises setting the melt flow rate of the polypropylene to be between 3 and 13 g/10 min.

19. The method of claim 14, wherein the paper powder has a maximum particle size not greater than 0.3 mm.

20. The method of claim 14, wherein the forming of the paper pellet mixture comprises:
mixing the paper powder with the starch to form a mixed powder;
adding a polyvinyl alcohol solution to the mixed powder and wet-forming the mixed powder with the polyvinyl alcohol to form wet-formed pellets; and
drying the wet-formed pellets to form the paper pellet mixture.

21. The method of claim 14, wherein the setting the weight amount of the starch to be higher than that of the paper powder comprises setting a weight ratio of the paper powder and the starch to be between 1 : 4 and 2 : 3.

22. The method of claim 15, wherein the setting of the weight ratio of the polypropylene to be not greater than about 50 weight % of the mixture of the paper pellet mixture and the polypropylene comprises setting the weight ratio of the polypropylene to be between 40 weight % and 50 weight % of the mixture of the paper pellet mixture and the polypropylene.

## Patentansprüche

1. Verfahren zur Herstellung von geschäumtem Wärmedämmstoff, unter Verwendung von Papier und Stärke umfassend:
Bereitstellen von Papierpulver, Stärke und Polypropylen als Haupt-komponente des Dämmstoffes durch:
Festlegen eines Gewichtsanteils der Stärke, der größer ist als der des Papierpulvers,
Festlegen eines Gewichtsverhältnisses des Polypropylens, das nicht größer ist als 50 Gewichtsprozent (%) der Hauptkomponente, und
Festlegen einer Schmelzflussrate des Polypropylens, zwischen 1 und 15 g/10 min;
Zugeben von Wasser zur Hauptkomponente, um ein Nassgemisch zu bilden; und Aufschäumen des Nassgemisches.

2. Verfahren nach Anspruch 1, wobei das Bereitstellen von Papierpulver, Stärke und Polypropylen die Bereitstellung von Maisstärke umfasst.

3. Verfahren nach Anspruch 2, wobei der geschäumte Wärmedämmstoff eine Wärmeleitfähigkeit von nicht mehr als 0.035 W/m-K aufweist.

4. Verfahren nach Anspruch 3, wobei der geschäumte Wärmedämmstoff eine Dichte von nicht mehr als 0.07 g/cm³ aufweist.

5. Verfahren nach Anspruch 1, wobei der geschäumte Wärmedämmstoff eine Wärmeleitfähigkeit von nicht mehr als 0.035 W/m-K aufweist.

6. Verfahren nach Anspruch 5, wobei der geschäumte Wärmedämmstoff eine Dichte von nicht mehr als 0.07 g/cm³ aufweist.

7. Verfahren nach Anspruch 1, wobei das Festlegen der Schmelzflussrate des Polypropylens, das Festlegen der Schmelzflussrate des Polypropylens zwischen 3 und 13 g/10 min umfasst.

8. Verfahren nach Anspruch 1, wobei das Papierpulver eine maximale Partikelgröße von nicht mehr als 0.3 mm aufweist.

9. Verfahren nach Anspruch 1, wobei das Festlegen des Gewichtsanteils der Stärke, der höher als der des Papierpulvers sein muss, das Festlegen des Gewichtsverhältnisses des Papierpulvers und der Stärke zwischen 1:4 und 2:3 umfasst.

10. Verfahren nach Anspruch 1, wobei das Festlegen des Gewichtsverhältnisses des Polypropylens, das nicht größer ist als 50 Gewichtsprozent (%) der Hauptkomponente, das Festlegen des Gewichtsverhältnisses des Polypropylens zwischen 40 und 50 Gewichtsprozent der Hauptkomponente umfasst.

11. Verfahren nach Anspruch 1, das zusätzlich umfasst:
Extrudieren des Nassgemisches durch einen Extruder.

12. Verfahren nach Anspruch 1, das zusätzlich umfasst:
Bereitstellen einer Pflanzenfaser als Teil der Hauptkomponente, die eine Durchschnittslänge zwischen 50 und 300 µm und eine Durchschnittsdicke zwischen 10 und 30 µm aufweist,

13. Verfahren nach Anspruch 12, wobei die Pflanzenfaser ausgewählt wird aus der Gruppe bestehend aus Holz, Stamm oder Fruchtmark des Zucker-rohres, Reishalmen, Gerstenstroh und Kombinationen davon.

14. Verfahren zur Herstellung von geschäumtem Wärmedämmstoff, umfassend:
Verarbeiten von Rohpapiermaterial zu Papierpulver;
Bilden eines Papierpelletgemisches durch Mischen des Papierpulvers mit Stärke und Festlegen eines Gewichtsanteils der Stärke, der höher ist als der des Papierpulvers;
Einführen des Papierpelletgemisches und des Polypropylens in einen Extruder, Festlegen eines Gewichtsverhältnisses des Polypropylens, das nicht größer ist als 50 Gewichtsprozent (%) einer Mischung aus Papier-pelletgemisch und Polypropylen, und Festlegen, einer Schmelzflussrate des Polypropylens zwischen 1 und 15 g/10 min;
Zugeben von Wasser zum Gemisch des Papierpelletgemisches und des Polypropylens, um ein Nassgemisch zu bilden; und
Aufschäumen des Nassgemisches.

15. Verfahren nach Anspruch 14, wobei das Mischen des Papierpulvers mit der Stärke das Mischen des Papierpulvers mit Maisstärke umfasst.

16. Verfahren nach Anspruch 14, wobei der Wärmedämmstoff eine Wänne-leitfähigkeit von nicht mehr als 0.035 W/m-K aufweist.

17. Verfahren nach Anspruch 16, wobei der Wärmedämmstoff eine Dichte von nicht mehr als 0.07 g/cm³ aufweist:

18. Verfahren nach Anspruch 14, wobei das Festlegen der Schmelzflussrate des Polypropylen, das Festlegen der Schmelzflussrate des Polypropylens zwischen 3 und 13 g/10 min umfasst.

19. Verfahren nach Anspruch 14, wobei das Papierpulver eine maximale Partikelgröße von nicht mehr als 0,3 mm aufweist.

20. Verfahren nach Anspruch 14, wobei die Bildung des Papierpelletgemisches umfasst:
Mischen des Papierpulvers mit der Stärke, um ein gemischtes Pulver zu bilden;
Zugeben einer Polyvinylalkohollösung zu dem gemischten Pulver und Nassformen des gemischten Pulvers mit dem Polyvinylalkohol, um nass-geformte Pellets zu erhalten; und
Trocknen der nassgeformten Pellets, um das Papierpelletgemisch zu erhalten.

21. Verfahren nach Anspruch 14, wobei das Festlegen des Gewichtsanteils der Stärke, der höher als der des Papierpulvers sein muss, das Festlegen des Gewichtsverhältnisses des Papierpulvers und der Stärke zwischen 1:4 und 2:3 umfasst.

22. Verfahren nach Anspruch 14, wobei das Festlegen des Gewichts-verhältnisses des Polypropylens, das nicht größer als 50 Gewichtsprozent (%) der Mischung aus Papierpelletgemisch und Polypropylen sein darf, das Festlegen des Gewichtsverhältnisses des Polypropylens zwischen 40 und 50 Gewichtsprozent der Mischung aus Papierpelletgemisch und Polypropylen umfasst.

## Revendications

1. Procédé de fabrication d'un matériau mousse d'isolation thermique à l'aide de papier et d'amidon, le procédé comprenant:
- pourvoir la poudre de papier, l'amidon, et le polypropylène comme un composant principal du matériau d'isolation par:
- déterminer une quantité en poids de l'amidon pour être supérieure à celle-là de la; poudre de papier,
- déterminer une proportion en poids du polypropylène pour ne dépasser pas 50 pour cents en poids (%) du composant principal, et
- déterminer un indice de fluidité du polypropylène d'être entre 1 et 15 g/10 min;
- ajouter de l'eau au composant principal pour former une mixture humide; et
- faire écumer la mixture humide.

2. Procédé selon la revendication 1, où pourvoir la poudre de papier, l'amidon, et le polypropylène comprend pourvoir l'amidon de maïs.

3. Procédé selon la revendication 2, où le matériau mousse d'isolation thermique a une conductivité thermique ne dépassant pas 0,035 W/m-K.

4. Procédé selon la revendication 3, où le matériau mousse d'isolation thermique a une densité ne dépassant pas 0,07 g/cm³.

5. Procédé selon la revendication 1, où le matériau mousse d'isolation thermique a une conductivité thermique ne dépassant pas 0,035 W/m-K.

6. Procédé selon la revendication 5, où le matériau mousse d'isolation thermique a une densité ne dépassant pas 0,07 g/cm³.

7. Procédé selon la revendication 1, où la détermination de l'indice de fluidité du polypropylène comprend la détermination de l'indice de fluidité du polypropylène pour être entre 3 et 13 g/10 min.

8. Procédé selon la revendication 1, où la poudre de papier a une taille maximum des particules ne dépassant pas 0,3 mm.

9. Procédé selon la revendication 1, où la détermination de la quantité en poids de l'amidon pour être supérieure à celle-là de la poudre de papier comprend la détermination d'un rapport en poids de la poudre de papier et de l'amidon pour être entre 1:4 et 2:3.

10. Procédé selon la revendication 1, où la détermination de la proportion en poids du polypropylène pour ne dépasser 50% en poids du composant principal comprend la détermination de la proportion en poids du polypropylène pour être entre 40 % en poids et 50% en poids du composant principal.

11. Procédé selon la revendication 1, comprenant de plus:
- extruder la mixture humide par une extrudeuse.

12. Procédé selon la revendication 1, comprenant de plus:
- pourvoir la fibre végétale ayant une longueur moyenne entre 50 et 300 µm et une épaisseur moyenne entre 10 et 30 µm comme une partie du composant principal.

13. Procédé selon la revendication 12, où la fibre végétale est sélectée du groupe formé de bois, tronc ou noyau de fruit de canne à sucre, pailles de riz, pailles d'orge, et de combinaisons de ceux-ci.

14. Procédé de fabrication d'un matériau mousse d'isolation thermique, le procédé comprenant:
- former une matière première de papier dans la poudre de papier;
- former une mixture de grains de papier en mélangeant la poudre de papier avec l'amidon, et déterminer une quantité en poids de l'amidon pour être supérieure à celle-là de la poudre de papier,
- introduire la mixture de grains de papier et le polypropylène dans une extrudeuse, déterminer une proportion en poids du polypropylène pour ne dépasser pas 50 pour cents en poids (%) d'une mixture formée de la mixture de grains de papier et de polypropylène, et déterminer un indice de fluidité du polypropylène d'être entre 1 et 15 g/10 min;
- ajouter de l'eau à la mixture formée de la mixture de grains de papier et de polypropylène pour former une mixture humide; et
- faire écumer la mixture humide.

15. Procédé selon la revendication 14, où la mixture de la poudre de papier avec l'amidon comprend la mixture de poudre de papier avec l'amidon de maïs.

16. Procédé selon la revendication 14, où le matériau mousse d'isolation thermique a une conductivité thermique ne dépassant pas 0,035 W/m-K.

17. Procédé selon la revendication 16, où le matériau mousse d'isolation thermique a une densité ne dépassant pas 0,07 g/cm³.

18. Procédé selon la revendication 14, où la détermination de l'indice de fluidité du polypropylène comprend la détermination de l'indice de fluidité du polypropylène pour être entre 3 et 13 g/10 min.

19. Procédé selon la revendication 14, où la poudre de papier a une taille maximum des particules ne dépassant pas 0,3 mm.

20. Procédé selon la revendication 14, où la formation de la mixture de grains de papier comprend:
- mélanger la poudre de papier avec l'amidon pour former une poudre mélangée;
- ajouter une solution de polyvinyle alcool à la poudre mélangée et former de manière humide la poudre mélangée avec le polyvinyle alcool pour former les grains humides; et
- sécher les grains humides pour former la mixture de grains de papier.

21. Procédé selon la revendication 14, où la détermination de la quantité en poids de l'amidon pour être supérieure à celle-là de la poudre de papier comprend la détermination d'un rapport en poids de la poudre de papier et de l'amidon pour être entre 1:4 et 2:3.

22. Procédé selon la revendication 14, où la détermination d'une proportion en poids du polypropylène pour ne dépasser pas 50 % en poids de la mixture formée de la mixture de grains de papier et de polypropylène comprend déterminer la proportion en poids du polypropylène pour être entre 40 % en poids et 50 % en poids de la mixture formée de la mixture de grains de papier et de polypropylène.
